# EUROPEAN PATENT SPECIFICATION

(11) **EP 4 099 816 B1**
(45) Date of publication and mention of the grant of the patent: **11.03.2026**
(21) Application number: 21701784.7
(22) Date of filing: 25.01.2021
(51) Int. Cl.: A01D 34/00, A01D 34/78, G05D 1/648

(54) **CONTROL ARRANGEMENT FOR ROBOTIC LAWNMOWER AND METHOD OF OPERATING ROBOTIC LAWNMOWER**
STEUERGERÄT FÜR EINEN SELBSTFAHRENDEN RASENMÄHER UND BETRIEBSVERFAHREN FÜR EINEN SELBSTFAHRENDEN RASENMÄHER
DISPOSITIF DE CONTRÔLE POUR UNE TONDEUSE AUTOTRACTÉE ET PROCÉDÉE DE CONTRÔLE POUR UNE TONDEUSE AUTOTRACTÉE

(30) Priority: 06.02.2020 SE 2050119
(43) Date of publication of application: 14.12.2022
(73) Proprietor: HUSQVARNA AB, 561 82 Huskvarna (SE)
(72) Inventor: DANLING, Anders, 564 32 BANKERYD (SE); HALLIN, Peter, 566 36 HABO (SE); EJDEHAG, Johan, 566 36 HABO (SE)
(86) International application number: PCT/EP2021/051541
(87) International publication number: WO 2021/156079

(56) References cited:
- EP-A1- 3 014 975
- WO-A1-2013/025135
- DE-U1- 212014 000 186
- US-A1- 2012 158 236

## Description

### TECHNICAL FIELD

The present disclosure relates to a control arrangement for a self-propelled robotic lawnmower. The present disclosure further relates to a self-propelled robotic lawnmower comprising a control arrangement, a method of operating a self-propelled robotic lawnmower, a computer program, and a computer-readable medium.

### BACKGROUND

A self-propelled robotic lawnmower is a lawnmower capable of cutting grass in areas in an autonomous manner, i.e. without the intervention or direct control of a user. Some robotic lawnmowers require a user to set up a border wire around a lawn that defines the area to be mowed. Such robotic lawnmowers use a sensor to locate the wire and thereby the boundary of the area to be trimmed. As an alternative, or in addition, robotic lawnmowers may comprise other types of positioning units and sensors, for example sensors for detecting an event, such as a collision with an object within the area. The robotic lawnmower may move in a systematic and/or random pattern to ensure that the area is completely cut. A robotic lawnmower usually comprises one or more batteries and one or more electrically driven cutting units being powered by the one or more batteries. In some cases, the robotic lawnmower uses the wire to locate a recharging dock used to recharge the one or more batteries.

Self-propelled robotic lawnmowers are associated with some mutual problems. One such problem is energy consumption of the robotic lawnmower. Cutting grass requires a lot of energy and after a certain operational time, the one or more batteries must be recharged. Another such problem is the cutting result, which can be subdivided into visual cutting result and uniformity of cutting. The visual cutting result can be defined as the visual cutting result determined by a person viewing a mowed lawn. The uniformity of the cutting can be defined as uniformity of a length of the grass of a mowed lawn, i.e. if straws of the grass in a lawn are cut to a uniform length. Another such problem is decomposition of grass clippings. That is, grass cut by the robotic lawnmower takes time to decompose, and such grass clippings may have a negative impact on the visual cutting result and may disturb users of the lawn.

The document DE 21 2014 000186 U1 relates to a self-propelled lawnmower comprising a lawnmower body running with torque transmitted to drive wheels from a power source for operation. The lawn mower body has a housing in which a power source for operation is provided, a power source for a rotary blade provided below the housing, and a rotary blade for mowing grass, which is provided below the power source for the rotary blade and is rotated with the power of the power source for the rotary blade. In a bottom view of the lawnmower body, at least a part of an arrangement area of the power source for operation and at least part of an arrangement area of the power source for the rotary blade overlap.

The document WO 2013/025135 A1 relates to a rotary lawn mower cutting blade. The cutting blade is arranged to rotate about a vertical axis of rotation of a lawn mower. The cutting blade includes a base portion, arranged to connect the cutting blade to a rotating carrier member attached to the lawn mower. The cutting blade further includes a cutting portion having at least one recess formed in a peripheral edge of the cutting portion. The at least one recess define at least one concave cutting edge.

The document EP 3 014 975 A1 relates to a garden tillage machine, in particular a lawn mower or brush cutter, with at least one cutting blade or a cutting line, with a drive unit for rotating the cutting blade or the cutting line at least in one preferred direction, with a control or regulation unit for the drive unit and with at least one user interface which, when actuated, sends control signals for activating the drive unit to the control or regulation unit. The control or regulating unit is provided for detecting a blockage of the cutting knife or the cutting thread and the drive unit switches off when a blockage is detected, the control or regulating unit controls or regulates the drive unit when the user interface is actuated again in such a way that the drive unit cuts the cutting blade or the cutting line after a first period of time and drives for a second period of time in the opposite direction to the preferred direction.

The document US 2012158236 A1 relates to a lawn mower for forming images. The lawn mower includes an image input unit receiving an image to be formed in a lawn area, a position detection unit detecting position information of the lawn mower on a movement path of the lawn mower, and a lawn mowing unit processing a lawn according to any one of a plurality of lawn processing patterns which corresponds to each position on the movement path while the lawn mower moves along the movement path. The lawn mower further comprises a control unit analysing the image received from the image input unit, determining a lawn processing pattern, which corresponds to the position information detected by the position detection unit, to express the image in the lawn area and controlling the lawn mowing unit according to the determined lawn processing pattern and independently of the movement path.

### SUMMARY

It is an object of the present invention to overcome, or at least alleviate, at least some of the above-mentioned problems and drawbacks.

According to a first aspect of the invention, the object is achieved by a control arrangement for a self-propelled robotic lawnmower, the lawnmower comprising a cutting unit configured to rotate during operation of the lawnmower, wherein a rotation direction of the cutting unit is reversible.

The control arrangement is configured to set the rotation direction of the cutting unit based on the location of a previous adjacent mowing stroke or an upcoming adjacent mowing stroke relative to a side of the lawnmower.

Thereby, a control arrangement is provided capable of controlling whether the grass clippings are to be ejected toward the side of the robotic lawnmower where the robotic lawnmower has already mowed or if grass clippings are to be ejected toward the side of the robotic lawnmower where the robotic lawnmower will mow in a simple and reliable manner.

That is, the rotation direction of the cutting unit affects the side of the robotic lawnmower at which grass clippings will be thrown during cutting. Mainly, the grass clippings will be ejected along a tangent in which a leading edge of the cutting unit is moving. Thus, a control arrangement is provided capable of controlling whether the grass clippings are to be ejected toward the side of the robotic lawnmower where the robotic lawnmower has already mowed or if grass clippings are to be ejected toward the side of the robotic lawnmower where the robotic lawnmower will mow.

According to some embodiments, the control arrangement may be configured to set the rotation direction of the cutting unit such that grass clippings are ejected toward the side of the robotic lawnmower where the robotic lawnmower has already mowed. Thereby, the energy consumption of the robotic lawnmower can be lowered and the cutting result can be improved. The energy consumption of the robotic lawnmower can be lowered because less force can be used to cut the grass since the cutting unit does not need to cut clippings from a previous mowing stroke. The cutting result can be improved because grass clippings ejected toward uncut areas may have a negative impact on the cutting process by flattening areas of the lawn and bending straws of grass in such areas leading to an impaired cutting result and a reduced uniformity of the length of the grass after cutting.

Furthermore, according to some embodiments of the present disclosure, the control arrangement may be configured to set the rotation direction of the cutting unit such that grass clippings are ejected toward the side of the robotic lawnmower where the robotic lawnmower will mow. Thereby, a more mulched cutting result can be obtained where the grass clippings are cut multiple times to provide grass clippings comprising straws of smaller size after cutting. In this manner, a faster decomposition of the grass clippings can be provided.

Accordingly, a control arrangement is provided overcoming, or at least alleviating, at least some of the above-mentioned problems and drawbacks. As a result, the above-mentioned object is achieved.

Optionally, the navigation path comprises substantially parallel adjacent mowing strokes. Thereby, a control arrangement is provided capable of navigating the robotic lawnmower in a systematic and structured manner while being capable of controlling whether the grass clippings are to be ejected toward the side of the robotic lawnmower where the robotic lawnmower has already mowed or if grass clippings are to be ejected toward the side of the robotic lawnmower where the robotic lawnmower will mow.

Optionally, the control arrangement is configured to trigger a reversal of the rotation direction of the cutting unit based on the lawnmower making a 180 degrees turn. Thereby, a control arrangement is provided capable of navigating the robotic lawnmower systematically in a back and forth manner while being capable of controlling whether the grass clippings are to be ejected toward the side of the robotic lawnmower where the robotic lawnmower has already mowed or if grass clippings are to be ejected toward the side of the robotic lawnmower where the robotic lawnmower will mow.

Optionally, the control arrangement is configured to operate in a first operational mode in which the control arrangement sets a rotation direction of the cutting unit causing a leading edge of the cutting unit, seen in a forward travel direction, to move in a direction towards a side of the lawnmower at which a previous adjacent mowing stroke is located. Thereby, the control arrangement will, when operating in the first operational mode, ensure that grass clippings are ejected toward the side of the robotic lawnmower where the robotic lawnmower has already mowed. This because, mainly, the grass clippings will be ejected in the moving direction of the leading edge of the cutting unit. Accordingly, a control arrangement is provided capable of reducing the energy consumption of the robotic lawnmower and improving the cutting result.

Optionally, the control arrangement is configured to operate in a second operational mode in which the control arrangement sets a rotation direction of the cutting unit causing a leading edge of the cutting unit, seen in a forward travel direction, to move in a direction away from a side of the lawnmower at which a previous adjacent mowing stroke is located. Thereby, the control arrangement will, when operating in the second operational mode, ensure that grass clippings are ejected toward the side of the robotic lawnmower where the robotic lawnmower most likely will mow. This because, mainly, the grass clippings will be ejected in the moving direction of the leading edge of the cutting unit. Accordingly, a control arrangement is provided capable of obtaining a more mulched cutting result.

Optionally, the lawnmower comprises an input unit, and wherein the control arrangement is controllable to operate in one of the first and second operational modes based on data from the input unit. Thereby, a control arrangement is provided allowing a selection between the first and second operational modes based on data from the input unit, and thereby also a selection between a more mulched cutting result and a lowered energy consumption of the robotic lawnmower and an improved cutting result based on data from the input unit.

According to some embodiments, the input unit comprises a unit allowing input from a user, such as a button, switch, touch sensitive display, or the like. According to such embodiments, the control arrangement thus allows a user to select between the first and second operational modes.

As an alternative, or in addition, the input unit may comprise a communication unit configured to receive data from an external communication unit. According to such embodiments, the control arrangement thus allows a wireless selection between the first and second operational modes by a user or by an external control system.

As a further alternative, or in addition, the input unit may be configured to obtain operational data from other components or systems of the robotic lawnmower, such as one or more batteries of the robotic lawnmower or a navigation control arrangement of the robotic lawnmower. According to such embodiments, the control arrangement may be configured to determine whether to operate in the first and second operational modes based on such operational data.

Optionally, the control arrangement is configured to further set the rotation direction of the cutting unit based on data representative of at least one of an energy level of a battery of the lawnmower and an estimated energy consumption for mowing along the navigation path. Thereby, a control arrangement is provided capable of determining whether to operate the robotic lawnmower in a mode providing a more mulched cutting result or to operate in a mode providing a lowered energy consumption of the robotic lawnmower and an improved cutting result based on data representative of at least one of an energy level of a battery of the lawnmower and an estimated energy consumption for mowing along the navigation path. As an example, the control arrangement may be configured set the rotation direction of the cutting unit ensuring that the grass clippings are ejected toward the side of the robotic lawnmower where the robotic lawnmower has already mowed if the data indicates a low energy level of the battery of the lawnmower and/or a high estimated energy consumption for mowing along the navigation path. In this manner, the energy consumption of the robotic lawnmower can be reduced, and the operational time of the robotic lawnmower can be extended before batteries of the robotic lawnmower must be recharged.

Optionally, the lawnmower comprises a second cutting unit configured to rotate during operation of the lawnmower, and wherein the control arrangement is configured to set a rotation direction of the second cutting unit based on the navigation path. Thereby, a control arrangement is provided capable of controlling whether the grass clippings are to be ejected toward the side of the robotic lawnmower where the robotic lawnmower has already mowed or if grass clippings are to be ejected toward the side of the robotic lawnmower where the robotic lawnmower will mow by setting the rotation direction of the second cutting unit based on the navigation path.

According to a second aspect of the invention, the object is achieved by a self-propelled robotic lawnmower comprising a control arrangement according to some embodiments of the present disclosure. In this manner, a robotic lawnmower is provided capable of controlling whether grass clippings are to be ejected toward the side of the robotic lawnmower where the robotic lawnmower has already mowed or if grass clippings are to be ejected toward the side of the robotic lawnmower where the robotic lawnmower will mow.

Accordingly, a self-propelled robotic lawnmower is provided overcoming, or at least alleviating, at least some of the above-mentioned problems and drawbacks. As a result, the above-mentioned object is achieved.

According to a third aspect of the invention, the object is achieved by a method of operating a self-propelled robotic lawnmower in accordance with claim 9, the lawnmower comprising a cutting unit configured to rotate during operation of the lawnmower, wherein a rotation direction of the cutting unit is reversible, and wherein the method comprises the steps of:
- navigating the lawnmower along the navigation path, and
- setting the rotation direction of the cutting unit based on the location of a previous adjacent mowing stroke or an upcoming adjacent mowing stroke relative to a side of the lawnmower.

Thereby, a method is provided capable of controlling whether the grass clippings are to be ejected toward the side of the robotic lawnmower where the robotic lawnmower has already mowed or if grass clippings are to be ejected toward the side of the robotic lawnmower where the robotic lawnmower will mow in a simple and reliable manner.

That is, the rotation direction of the cutting unit affects the side of the robotic lawnmower at which grass clippings will be thrown during cutting. Mainly, the grass clippings will be ejected along a tangent in which a leading edge of the cutting unit is moving. Thus, a method is provided capable of controlling whether the grass clippings are to be ejected toward the side of the robotic lawnmower where the robotic lawnmower has already mowed or if grass clippings are to be ejected toward the side of the robotic lawnmower where the robotic lawnmower will mow.

According to some embodiments, the method may be configured to set the rotation direction of the cutting unit such that grass clippings are ejected toward the side of the robotic lawnmower where the robotic lawnmower has already mowed. Thereby, the energy consumption of the robotic lawnmower can be lowered and the cutting result can be improved. The energy consumption of the robotic lawnmower can be lowered because less force can be used to cut the grass because the cutting unit does not need to cut clippings from a previous mowing stroke. The cutting result can be improved because grass clippings ejected toward uncut areas may have a negative impact on the cutting process by flattening areas of the lawn and bending straws of grass in such areas leading to an impaired cutting result and a reduced uniformity of the length of the grass after cutting.

Furthermore, according to some embodiments of the present disclosure, the method may be configured to set the rotation direction of the cutting unit such that grass clippings are ejected toward the side of the robotic lawnmower where the robotic lawnmower will mow. Thereby, a more mulched cutting result can be obtained where the grass clippings are cut multiple times to provide grass clippings comprising straws of smaller size after cutting. In this manner, a faster decomposition of the grass clippings can be provided.

Accordingly, a method is provided overcoming, or at least alleviating, at least some of the above-mentioned problems and drawbacks. As a result, the above-mentioned object is achieved.

Optionally, the method further comprises:
- triggering a reversal of the rotation direction of the cutting unit based on the lawnmower making a 180 degrees turn.

Thereby, a method is provided capable of navigating the robotic lawnmower systematically in a back and forth manner while being capable of controlling whether the grass clippings are to be ejected toward the side of the robotic lawnmower where the robotic lawnmower has already mowed or if grass clippings are to be ejected toward the side of the robotic lawnmower where the robotic lawnmower will mow.

Optionally, the method further comprises, in a first operational mode:
- setting a rotation direction of the cutting unit causing a leading edge of the cutting unit, seen in a forward travel direction, to move in a direction towards a side of the lawnmower at which a previous adjacent mowing stroke is located.

Thereby, the method will, when operating in the first operational mode, ensure that grass clippings are ejected toward the side of the robotic lawnmower where the robotic lawnmower has already mowed. This because, mainly, the grass clippings will be ejected in the moving direction of the leading edge of the cutting unit. Accordingly, a method is provided capable of reducing the energy consumption of the robotic lawnmower and improving the cutting result.

Optionally, the method further comprises, in a second operational mode:
- setting a rotation direction of the cutting unit causing a leading edge of the cutting unit, seen in a forward travel direction, to move in a direction away from a side of the lawnmower at which a previous adjacent mowing stroke is located.

Thereby, the method will, when operating in the second operational mode, ensure that grass clippings are ejected toward the side of the robotic lawnmower where the robotic lawnmower most likely will mow. This because, mainly, the grass clippings will be ejected in the moving direction of the leading edge of the cutting unit. Accordingly, a method is provided capable of obtaining a more mulched cutting result.

Optionally, the lawnmower comprises an input unit, and wherein the method comprises:
- selecting between one of the first and second operational modes based on data from the input unit.

Thereby, a method is provided allowing a selection between the first and second operational modes based on data from the input unit, and thereby also a selection between a more mulched cutting result and a lowered energy consumption of the robotic lawnmower and an improved cutting result based on data from the input unit.

Optionally, the method comprises:
- setting the rotation direction of the cutting unit based on data representative of at least one of an energy level of a battery of the lawnmower and an estimated energy consumption for mowing along the navigation path.

Thereby, a method is provided capable of determining whether to operate the robotic lawnmower in a mode providing a more mulched cutting result or to operate in a mode providing a lowered energy consumption of the robotic lawnmower and an improved cutting result based on data representative of at least one of an energy level of a battery of the lawnmower and an estimated energy consumption for mowing along the navigation path. As an example, the method may be configured set the rotation direction of the cutting unit ensuring that the grass clippings are ejected toward the side of the robotic lawnmower where the robotic lawnmower has already mowed if the data indicates a low energy level of the battery of the lawnmower and/or a high estimated energy consumption for mowing along the navigation path. In this manner, the energy consumption of the robotic lawnmower can be reduced, and the operational time of the robotic lawnmower can be extended before batteries of the robotic lawnmower must be recharged.

According to a fourth aspect of the invention, the object is achieved by a computer program in accordance with claim 15.

According to a fifth aspect of the invention, the object is achieved by a computer-readable medium in accordance with claim 16.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a self-propelled robotic lawnmower, according to some embodiments of the present disclosure, mowing a lawn along a navigation path,
Fig. 2 illustrates the self-propelled robotic lawnmower according to the embodiments illustrated in Fig. 1, mowing a lawn along a navigation path according to some further embodiments,
Fig. 3 illustrates a self-propelled robotic lawnmower according to some further embodiments, mowing a lawn along a navigation path,
Fig. 4 illustrates a method of operating a self-propelled robotic lawnmower according to some embodiments, and
Fig. 5 illustrates computer-readable medium, according to some embodiments.

### DETAILED DESCRIPTION

Aspects of the present invention will now be described more fully. Like numbers refer to like elements throughout. Well-known functions or constructions will not necessarily be described in detail for brevity and/or clarity.

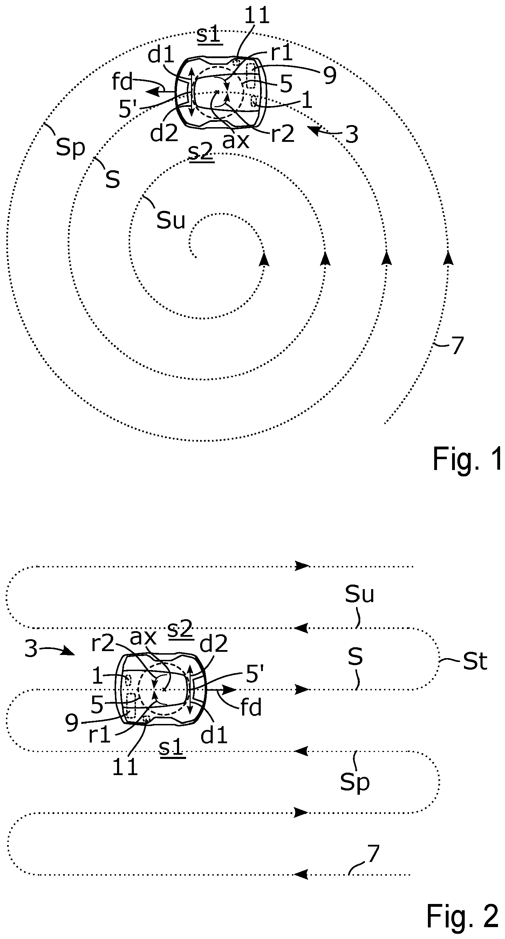

**Fig. 1** illustrates a self-propelled robotic lawnmower 3, according to some embodiments of the present disclosure, mowing a lawn along a navigation path 7. The robotic lawnmower 3 is a self-propelled autonomous robotic lawnmower 1 capable of navigating and cutting grass in an autonomous manner in an area without the intervention or the direct control of a user. For the reason of brevity and clarity, the self-propelled autonomous robotic lawnmower 1 is in some places herein referred to as "the robotic lawnmower 1" or simply the "lawnmower 1".

According to the illustrated embodiments, the robotic lawnmower 1 is configured to be used to cut grass in areas used for aesthetic and recreational purposes, such as gardens, parks, city parks, sports fields, lawns around houses, apartments, commercial buildings, offices, and the like.

The robotic lawnmower 3 comprises a cutting unit 5 configured to rotate around a rotation axis ax during operation of the lawnmower 3. The robotic lawnmower 3 may comprise an electric motor configured to rotate the cutting unit 5 during operation of the lawnmower 3. The electric motor is not illustrated in Fig. 1 for the reason of brevity and clarity. Moreover, the robotic lawnmower 3 comprises wheels configured to abut against a ground surface during operation of the robotic lawnmower 3. The rotation axis ax of the cutting unit 5 is transversal to the ground plane. According to the illustrated embodiments, the rotation axis ax of the cutting unit 5 is substantially vertical relative to the ground surface meaning that the angle between the rotation axis ax and a surface normal of the ground surface is less than 7 degrees. One or more of the wheels of the robotic lawnmower 3 may be powered by an electrical propulsion motor. The wheel/wheels and the electrical propulsion motor/motors are not illustrated in Fig. 1 for the reason of brevity and clarity. The robotic lawnmower 3 comprises a battery 9 configured to supply electricity to electrical components of the robotic lawnmower 3, such as an electric motor configured to rotate the cutting unit 5 and one or more electrical propulsion motors.

The robotic lawnmower 3 further comprises a control arrangement 1. The control arrangement 1 is configured to navigate the robotic lawnmower 3 along a navigation path 7 comprising adjacent mowing strokes S, Sp, Su. The control arrangement 1 may navigate the robotic lawnmower 3 by controlling rotation of one or more wheels of the robotic lawnmower 3. The control arrangement 1 may be configured to control rotation of the one or more wheels by controlling the power and direction of one or more propulsion motors. According to further embodiments, the robotic lawnmower 3 may comprise one or more steered wheels. According to such embodiments, the control arrangement 1 may be configured to turn, steer, and navigate the robotic lawnmower 3 by controlling a steering angle of the one or more steered wheels. Moreover, according to some embodiments, the robotic lawnmower 3 may comprise articulated body portions. According to such embodiments, the control arrangement 1 may be configured to turn, steer, and navigate the robotic lawnmower 3 by controlling an angle between the articulated body portions.

The control arrangement 1 may be configured to navigate the robotic lawnmower 3 along the navigation path 7 using input from a sensor arrangement. Such a sensor arrangement may comprise one or more positioning units configured to estimate a current position of the robotic lawnmower 3, such as for example a space based satellite navigation system such as a Global Positioning System (GPS), The Russian GLObal NAvigation Satellite System (GLONASS), European Union Galileo positioning system, Chinese Compass navigation system, or Indian Regional Navigational Satellite System. As an alternative, or in addition, the sensor arrangement may comprise one or more positioning units utilizing a local reference source, such as a local sender or a wire, to estimate or verify a current position of the robotic lawnmower 3. Moreover, such a sensor arrangement may comprise one or more impact sensors configured to detect collision events between the robotic lawnmower 3 and another object.

According to the invention, the control arrangement 1 is configured to set a rotation direction r1, r2 of the cutting unit 5, 6 based on the location of a previous adjacent mowing stroke (Sp) or an upcoming adjacent mowing strike (Su) relative to a side (s1, s2) of the lawnmower 1.

According to the embodiments illustrated in Fig. 1, the navigation path 7 is spiral-shaped, wherein the lawnmower 3 is traveling towards a centre of the spiral. According to these embodiments, the navigation path 7 may also comprise straight sections, such as four straight sections, wherein the robotic lawnmower 3 may make a 90 degrees turn after each straight section. The navigation path 7 comprises adjacent mowing strokes S, Sp, Su, wherein the mowing stroke S denotes a current mowing stroke S, the mowing strokes Sp denotes a previous mowing stroke Sp, i.e. a mowing stroke Sp already cut by the robotic lawnmower 3, and the mowing stroke Su denotes an upcoming mowing stroke Su, i.e. a future mowing stroke Sp that the robotic lawnmower 3 will cut.

The rotation direction r1, r2 of the cutting unit affects the side s1, s2 of the robotic lawnmower 3 at which grass clippings will be thrown during cutting. Mainly, the grass clippings will be ejected along a tangent of a moving direction d1, d2 of a leading edge 5' of the cutting unit 5 seen in a forward travel direction fd. The forward travel direction fd of the robotic lawnmower 3 coincides with a longitudinal direction of the robotic lawnmower 3. The moving direction d1, d2 of the leading edge 5' of the cutting unit 5 seen in the forward travel direction fd thus coincides with a lateral direction of the robotic lawnmower 3. Accordingly, control arrangement 1 is provided capable of controlling whether the grass clippings are to be ejected toward the side s1 of the robotic lawnmower 3 where the robotic lawnmower 3 has already mowed or if grass clippings are to be ejected toward the side s2 of the robotic lawnmower 3 where the robotic lawnmower 3 will mow. In other words, the control arrangement 1 can control whether the grass clippings are to be ejected toward the previous mowing stroke Sp or toward the upcoming mowing stroke Su.

By ejecting the grass clippings toward the previous mowing stroke Sp, the energy consumption of the robotic lawnmower 3 can be lowered and the cutting result can be improved. By ejecting the grass clippings toward the upcoming mowing stroke Su, a more mulched cutting result can be obtained.

**Fig. 2** illustrates the self-propelled robotic lawnmower 3 according to the embodiments illustrated in Fig. 1, mowing a lawn along a navigation path 7 according to some further embodiments. In Fig. 2, the navigation path 7 comprises substantially parallel adjacent mowing strokes S, Sp, Su. The control arrangement 1 is configured to set the rotation direction r1, r2 of the cutting unit 5 based on the location of a previous adjacent mowing stroke Sp, or an upcoming adjacent mowing stroke Su, relative to a side s1, s2 of the lawnmower 1.

According to some embodiments, the control arrangement 1 is configured to trigger a reversal of the rotation direction r1, r2 of the cutting unit 5 based on the lawnmower 3 making a 180 degrees turn St. In this manner, the control arrangement 1 can ensure that grass clippings are ejected toward a previous mowing stroke Sp, or to toward an upcoming mowing stroke Sp, also when the robotic lawnmower 3 is navigating along a navigation path 7 comprising a back and forth pattern comprising substantially parallel adjacent mowing strokes S, Sp, Su.

According to some embodiments, the control arrangement 1 is configured to operate in a first operational mode in which the control arrangement 1 sets a rotation direction r1 of the cutting unit 5, causing a leading edge 5' of the cutting unit 5, seen ir a forward travel direction fd, to move in a direction d1 towards a side s1 of the lawnmower 3 at which a previous adjacent mowing stroke Sp is located.

Moreover, the control arrangement 1 may be configured to operate in a second operational mode in which the control arrangement 1 sets a rotation direction r2 of the cutting unit 5, causing a leading edge 5' of the cutting unit 5, seen in a forward travel direction fd, to move in a direction d2 away from a side s1 of the lawnmower 3 at which a previous adjacent mowing stroke Sp is located.

When the robotic lawnmower 3 illustrated in Fig. 2 is operating in the first operational mode and the robotic lawnmower 3 is moving along a mowing stoke S having a previous mowing stroke Sp to the right side s1 of the robotic lawnmower 3 seen in a forward direction fd of the lawnmower 3, the control arrangement 1 will control the cutting unit 5 to rotate in a clockwise rotation direction r1 seen from above in a direction towards the ground surface. In this manner, the grass clippings will be ejected toward the right side s1 of the robotic lawnmower 3 seen in a forward direction fd of the lawnmower 3, i.e. toward the previous mowing stroke Sp. When the lawnmower 3 has made a 180 degrees turn St, the previous mowing stroke will be to the left side s2 of the robotic lawnmower 3 seen in a forward direction fd of the lawnmower 3. Thus, by reversing the rotation direction from the clockwise direction r1 to a counter clockwise direction r2 seen from above in a direction towards the ground surface, the grass clippings will be ejected toward the left side s2 of the robotic lawnmower 3 seen in a forward direction fd of the lawnmower 3, i.e. toward the previous mowing stroke Sp. By ejecting the grass clippings toward the previous mowing stroke Sp, a lowered energy consumption of the robotic lawnmower 3 can be provided, a longer battery life of the battery 9 can be provided, and an improved cutting result can be obtained also when the robotic lawnmower 3 is navigating along a navigation path 7 comprising a back and forth pattern comprising substantially parallel adjacent mowing strokes S, Sp, Su.

When the robotic lawnmower 3 illustrated in Fig. 2 is operating in the second operational mode and the robotic lawnmower 3 is moving along a mowing stoke S having a previous mowing stroke Sp to the right of the robotic lawnmower 3 seen in a forward direction fd of the lawnmower 3, the control arrangement 1 will control the cutting unit 5 to rotate in a counterclockwise rotation direction r2 seen from above in a direction towards the ground surface. In this manner, the grass clippings will be ejected toward the left side S2 of the robotic lawnmower 3 seen in a forward direction fd of the lawnmower 3, i.e. toward the upcoming mowing stroke Su. When the lawnmower 3 has made a 180 degrees turn St, the previous mowing stroke will be to the left side s2 of the robotic lawnmower 3 seen in a forward direction fd of the lawnmower 3. Thus, by reversing the rotation direction from the counterclockwise direction r2 to a clockwise direction r1 seen from above in a direction towards the ground surface, the grass clippings will be ejected toward the right side s1 of the robotic lawnmower 3 seen in a forward direction fd of the lawnmower 3, i.e. toward an upcoming mowing stroke Su. In this manner, a more mulched cutting result can be obtained also when the the robotic lawnmower 3 is navigating along a navigation path 7 comprising a back and forth pattern comprising substantially parallel adjacent mowing strokes S, Sp, Su.

According to the illustrated embodiments, the lawnmower 3 comprises an input unit 11. The control arrangement 1 is controllable to operate in one of the first and second operational modes based on data from the input unit 11.

According to some embodiments, the input unit 11 may comprise a unit allowing input from a user, such as a button, switch, touch sensitive display, or the like. According to such embodiments, the control arrangement may allow a user to select between the first and second operational modes.

As an alternative, or in addition, the input unit 11 may comprise a communication unit configured to receive data from an external communication unit. According to such embodiments, the control arrangement may allow a wireless selection between the first and second operational modes by a user or by an external control system.

As a further alternative, or in addition, the input unit 11 may be configured to obtain operational data from other components or systems of the robotic lawnmower 3, such as one or more batteries 9 of the robotic lawnmower 3, or a navigation control arrangement 1 of the robotic lawnmower 3. According to such embodiments, the control arrangement 1 may be configured to determine whether to operate in the first and second operational modes based on such operational data. According to some embodiments, the input unit 11 is a data input unit 11. According to such embodiments, the input unit 11 may also be referred to as a data input unit 11.

According to some embodiments, the control arrangement 1 is configured to further set the rotation direction r1, r2 of the cutting unit 5, 6, based on data representative of at least one of an energy level of a battery 9 of the lawnmower 3 and an estimated energy consumption for mowing along the navigation path 7. According to such embodiments, the control arrangement 1 may set a rotation direction r1 of the cutting unit 5, or may select a navigation path 7, causing a leading edge 5' of the cutting unit 5, seen in a forward travel direction fd, to move in a direction d1 towards a side s1 of the lawnmower 3 at which a previous adjacent mowing stroke Sp is located, if the energy level of the battery 9 is below a threshold value or if the estimated energy consumption for mowing along the navigation path 7 exceeds a threshold value.

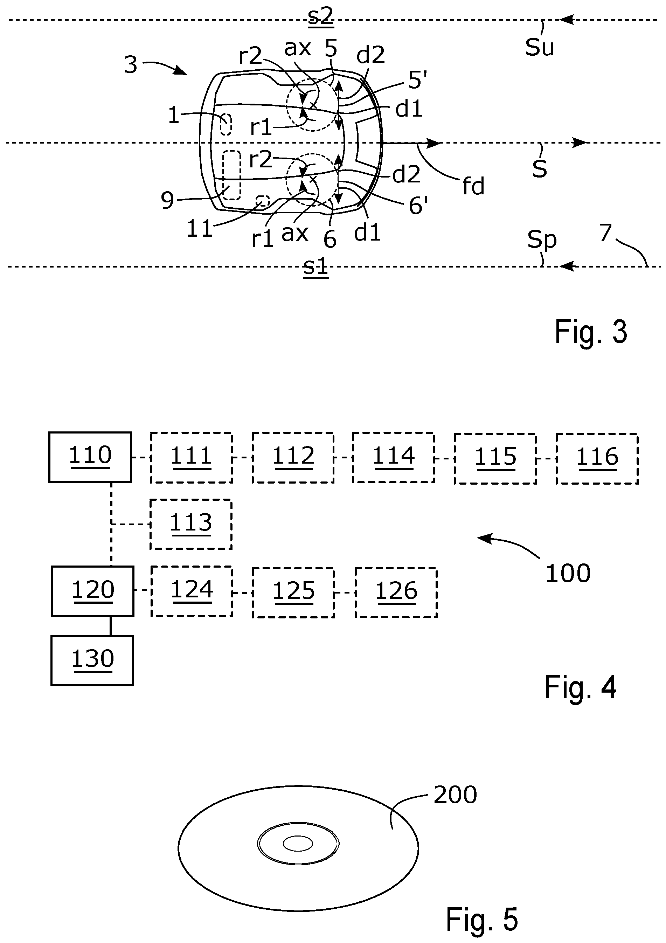

**Fig. 3** illustrates a self-propelled robotic lawnmower 3 according to some further examples, mowing a lawn along a navigation path 7. The robotic lawnmower 3 according to the embodiments illustrated in Fig. 3 comprises the same features, functions, and advantages as the robotic lawnmower 3 explained with reference to Fig. 1 and Fig. 2, with some differences explained below. According to the embodiments illustrated in Fig. 3, the lawnmower 3 comprises a first and a second cutting unit 5, 6. That is, according to the illustrated embodiments, the lawnmower comprises two cutting units 5, 6, wherein each cutting unit 5, 6 is configured to rotate around a respective rotation axis ax during operation of the lawnmower 3. According to further embodiments, the robotic lawnmower 3 may comprise more than two cutting units 5, 6, such as three, four, or five cutting units 5, 6. The rotation axes ax of the first and second cutting units 5, 6 are transversal to the ground plane. According to the illustrated embodiments, the rotation axes ax of the first and second cutting units 5, 6 are substantially vertical relative to the ground surface meaning that the angle between each rotation axis ax and a surface normal of the ground surface is less than 7 degrees. The robotic lawnmower 3 may comprise one electric motor per cutting unit 5, 6, or may comprise one electric motor configured to rotate the cutting units 5, 6 of the robotic lawnmower 3. Such electric motor/motors is/are not illustrated in Fig. 3 for the reason of brevity and clarity.

According to these embodiments, first and second cutting unit 5, 6 are rotated in the same rotational direction r1, r2. As an example, if the robotic lawnmower 3 according to the illustrated embodiments is operating in the first operational mode and the robotic lawnmower 3 is navigated along the navigation path 7 illustrated in Fig. 3, the first and second cutting units 5, 6 are rotated in a clockwise rotation direction r1. In this manner, the grass clippings from the first and second cutting unit 5, 6 are ejected in a direction d1 towards a previous mowing stroke Sp. As another example, if the robotic lawnmower 3 according to the illustrated embodiments is operating in the second operational mode and the robotic lawnmower 3 is navigated along the navigation path 7 illustrated in Fig. 3, the first and second cutting units 5, 6 are rotated in a counterclockwise rotation direction r2. In this manner, the grass clippings from the first and second cutting unit 5, 6 are ejected in a direction d2 towards an upcoming mowing stroke Su.

A cutting unit 5, 6, as referred to herein, may comprise a cutting disc with a number of cutting members arranged at a periphery of the cutting disc. The cutting members may be pivotally arranged at the periphery of the cutting disc. As an alternative, a cutting unit 5, 6, as referred to herein, may comprise an elongated cutting arm provided with cutting edges.

**Fig. 4** illustrates a method 100 of operating a self-propelled robotic lawnmower. The self-propelled robotic lawnmower may be a robotic lawnmower 3 according to the embodiments explained with reference to Fig. 1 and Fig. 2, or a robotic lawnmower 3 explained with reference to Fig. 3. Therefore, below, simultaneous reference is made to Fig. 1 - Fig. 4. The method 100 is a method 100 of operating a self-propelled robotic lawnmower 3, the lawnmower 3 comprising a cutting unit 5, 6 configured to rotate during operation of the lawnmower 3, wherein the method 100 comprises the steps of:
- navigating 130 the lawnmower 3 along the navigation path 7.

In accordance with the invention, as also illustrated in Fig. 4, the method 100 comprises:
- setting 111 the rotation direction r1, r2 of the cutting unit 5, 6 based on the location of a previous adjacent mowing stroke Sp or an upcoming adjacent mowing stroke Su relative to a side s1, s2 of the lawnmower 1.

Moreover, as illustrated in Fig. 4, the method 100 may comprise:
- triggering 112 a reversal of the rotation direction r1, r2 of the cutting unit 5, 6 based on the lawnmower 3 making a 180 degrees turn St.

Moreover, as illustrated in Fig. 4, the method 100 may comprise, in a first operational mode:
- setting 114 a rotation direction r1 of the cutting unit 5, 6 causing a leading edge 5', 6' of the cutting unit 5, 6, seen in a forward travel direction fd, to move in a direction d1 towards a side s1 of the lawnmower 3 at which a previous adjacent mowing stroke Sp is located, causing a leading edge 5', 6' of the cutting unit 5, 6, seen in a forward travel direction fd, to move in a direction d1 towards a side s1 of the lawnmower 3 at which a previous adjacent mowing stroke Sp is located.

Furthermore, as illustrated in Fig. 4, the method 100 may comprise the method 100 further comprises, in a second operational mode:
- setting 115 a rotation direction r2 of the cutting unit 5, 6 causing a leading edge 5', 6' of the cutting unit 5, 6, seen in a forward travel direction fd, to move in a direction d2 away from a side s1 of the lawnmower 3 at which a previous adjacent mowing stroke Sp is located, causing a leading edge 5', 6' of the cutting unit 5, 6, seen in a forward travel direction fd, to move in a direction d2 away from a side s1 of the lawnmower 3 at which a previous adjacent mowing stroke Sp is located.

According to some embodiments, the lawnmower 3 comprises an input unit 11, and as illustrated in Fig. 4, the method 100 may comprise:
- selecting 113 between one of the first and second operational modes based on data from the input unit 11.

Moreover, as illustrated in Fig. 4, the method 100 may comprise:
- setting 116 the rotation direction r1, r2 of the cutting unit 5, 6 based on data representative of at least one of an energy level of a battery 9 of the lawnmower 3 and an estimated energy consumption for mowing along the navigation path 7, based on data representative of at least one of an energy level of a battery 9 of the lawnmower 3 and an estimated energy consumption for mowing along the navigation path 7.

It will be appreciated that the various embodiments described for the method 100 are all combinable with the control arrangement 1 as described herein. That is, the control arrangement 1 may be configured to perform any one of the method steps 110, 111, 112, 113, 114, 115, 116, 120, 124, 125, 126, and 130 of the method 100.

**Fig. 5** illustrates computer-readable medium 200 comprising instructions which, when executed by a computer, cause the computer to carry out the method 100 according to some embodiments of the present disclosure.

According to the invention, the computer-readable medium 200 comprises a computer program in accordance with claim 15.

One skilled in the art will appreciate that the method 100 of operating a self-propelled robotic lawnmower 3 may be implemented by programmed instructions. These programmed instructions are typically constituted by a computer program, which, when it is executed in the control arrangement 1, ensures that the control arrangement 1 carries out the desired control, such as the method steps 110, 111, 112, 113, 114, 115, 116, 120, 124, 125, 126, and 130 described herein. The computer program is usually part of a computer program product 200 which comprises a suitable digital storage medium on which the computer program is stored.

The control arrangement 1 may comprise a calculation unit which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

The control arrangement 1 may further comprise a memory unit, wherein the calculation unit may be connected to the memory unit, which may provide the calculation unit with, for example, stored program code and/or stored data which the calculation unit may need to enable it to do calculations. The calculation unit may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 1 is connected to components of the robotic lawnmower 3 for receiving and/or sending input and output signals. These input and output signals may comprise waveforms, pulses, or other attributes which the input signal receiving devices can detect as information and which can be converted to signals processable by the control arrangement 1. These signals may then be supplied to the calculation unit. One or more output signal sending devices may be arranged to convert calculation results from the calculation unit to output signals for conveying to other parts of the robotic lawnmower's control system and/or the component or components for which the signals are intended. Each of the connections to the respective components of the robotic lawnmower 3 for receiving and sending input and output signals may take the form of one or more from among a cable, a data bus, e.g. a CAN (controller area network) bus, or some other bus configuration, or a wireless connection.

In the embodiments illustrated, the robotic lawnmower 3 comprises a control arrangement 1 but might alternatively be implemented wholly or partly in two or more control arrangements or two or more control units.

The computer program product 200 may be provided for instance in the form of a data carrier carrying computer program code for performing at least some of the method steps 110, 111, 112, 113, 114, 115, 116, 120, 124, 125, 126, and 130 according to some embodiments when being loaded into one or more calculation units of the control arrangement 1. The data carrier may be, e.g. a CD ROM disc, as is illustrated in Fig. 5, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. The computer program product may furthermore be provided as computer program code on a server and may be downloaded to the control arrangement 1 remotely, e.g., over an Internet or an intranet connection, or via other wired or wireless communication systems.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A control arrangement (1) for a self-propelled robotic lawnmower (3),
the lawnmower (3) comprising a cutting unit (5, 6) configured to rotate during operation of the lawnmower (3), wherein a rotation direction (r1, r2) of the cutting unit (5, 6) is reversible, and
wherein the control arrangement (1) is configured to navigate the lawnmower (3) along a navigation path (7) comprising adjacent mowing strokes (S, Sp, Su),
**characterized in that** the control arrangement (1) is configured to set the rotation direction (r1, r2) of the cutting unit (5, 6) based on the location of a previous adjacent mowing stroke (Sp) or an upcoming adjacent mowing stroke (Su) relative to a side (s1, s2) of the lawnmower (3).

2. The control arrangement (1) according to claim 1, wherein the navigation path (7) comprises parallel adjacent mowing strokes (S, Sp, Su).

3. The control arrangement (1) according to claim 1 or 2, wherein the control arrangement (1) is configured to trigger a reversal of the rotation direction (r1, r2) of the cutting unit (5, 6) based on the lawnmower (3) making a 180 degrees turn (St).

4. The control arrangement (1) according to any one of the preceding claims, wherein the control arrangement (1) is configured to operate in a first operational mode in which the control arrangement (1) sets a rotation direction (r1) of the cutting unit (5, 6) causing a leading edge (5', 6') of the cutting unit (5, 6), seen in a forward travel direction (fd), to move in a direction (d1) towards a side (s1) of the lawnmower (3) at which a previous adjacent mowing stroke (Sp) is located.

5. The control arrangement (1) according to any one of the preceding claims, wherein the control arrangement (1) is configured to operate in a second operational mode in which the control arrangement (1) sets a rotation direction (r2) of the cutting unit (5, 6) causing a leading edge (5', 6') of the cutting unit (5, 6), seen in a forward travel direction (fd), to move in a direction (d2) away from a side (s1) of the lawnmower (3) at which a previous adjacent mowing stroke (Sp) is located.

6. The control arrangement (1) according to claim 4 and 5, wherein the lawnmower (3) comprises an input unit (11), and wherein the control arrangement (1) is controllable to operate in one of the first and second operational modes based on data from the input unit (11).

7. The control arrangement (1) according to any one of the preceding claims, wherein the control arrangement (1) is configured to further set the rotation direction (r1, r2) of the cutting unit (5, 6) based on data representative of at least one of an energy level of a battery (9) of the lawnmower (3) and an estimated energy consumption for mowing along the navigation path (7).

8. A self-propelled robotic lawnmower (3) comprising a control arrangement (1) according to any one of the claims 1 - 7.

9. A method (100) of operating a self-propelled robotic lawnmower (3), the lawnmower (3) comprising a cutting unit (5, 6) configured to rotate during operation of the lawnmower (3), wherein a rotation direction (r1, r2) of the cutting unit (5, 6) is reversible, and
wherein the lawnmower (3) comprises a control arrangement (1) configured to navigate the lawnmower (3), and
wherein the method (100) comprises the steps of:
- navigating (130) the lawnmower (3) along a navigation path (7), and
- setting (111) the rotation direction (r1, r2) of the cutting unit (5, 6) based on the location of a previous adjacent mowing stroke (Sp) or an upcoming adjacent mowing stroke (Su) relative to a side (s1, s2) of the lawnmower (3).

10. The method (100) according to claim 9, wherein the method (100) further comprises:
- triggering (112) a reversal of the rotation direction (r1, r2) of the cutting unit (5, 6) based on the lawnmower (3) making a 180 degrees turn (St).

11. The method (100) according to claim 9 or 10, wherein the method (100) further comprises, in a first operational mode:
- setting (114) a rotation direction (r1) of the cutting unit (5, 6) causing a leading edge (5', 6') of the cutting unit (5, 6), seen in a forward travel direction (fd), to move in a direction (d1) towards a side (s1) of the lawnmower (3) at which a previous adjacent mowing stroke (Sp) is located.

12. The method (100) according to any one of the claims 9 - 11, wherein the method (100) further comprises, in a second operational mode:
- setting (115) a rotation direction (r2) of the cutting unit (5, 6) causing a leading edge (5', 6') of the cutting unit (5, 6), seen in a forward travel direction (fd), to move in a direction (d2) away from a side (s1) of the lawnmower (3) at which a previous adjacent mowing stroke (Sp) is located.

13. The method (100) according to claim 11 and 12, wherein the lawnmower (3) comprises an input unit (11), and wherein the method (100) comprises:
- selecting (113) between one of the first and second operational modes based on data from the input unit (11).

14. The method (100) according to any one of the claims 9 - 13, wherein the method (100) comprises:
- setting (116) the rotation direction (r1, r2) of the cutting unit (5, 6) based on data representative of at least one of an energy level of a battery (9) of the lawnmower (3) and an estimated energy consumption for mowing along the navigation path (7).

15. A computer program comprising instructions which, when the program is executed by a control arrangement (1) according to any one of the claims 1 - 7, cause the control arrangement (1) to carry out the method (100) according to any one of the claims 9 - 14.

16. A computer-readable medium (200) having stored thereon the computer program of claim 15.

## Patentansprüche

1. Steueranordnung (1) für einen selbstangetriebenen robotischen Rasenmäher (3),
der Rasenmäher (3) umfassend eine Schneideinheit (5, 6), die konfiguriert ist, um sich während des Betriebs des Rasenmähers (3) zu drehen, wobei eine Drehrichtung (r1, r2) der Schneideinheit (5, 6) umkehrbar ist, und
wobei die Steueranordnung (1) konfiguriert ist, um den Rasenmäher (3) entlang eines Navigationspfads (7) zu navigieren, umfassend angrenzende Mähhübe (S, Sp, Su),
**dadurch gekennzeichnet, dass** die Steueranordnung (1) konfiguriert ist, um die Drehrichtung (r1, r2) der Schneideinheit (5, 6) basierend auf dem Ort eines vorherigen angrenzenden Mähhubs (Sp) oder eines bevorstehenden angrenzenden Mähhubs (Su) relativ zu einer Seite (s1, s2) des Rasenmähers (3) einzustellen.

2. Steueranordnung (1) nach Anspruch 1, wobei der Navigationspfad (7) parallele, angrenzende Mähhübe (S, Sp, Su) umfasst.

3. Steueranordnung (1) nach Anspruch 1 oder 2, wobei die Steueranordnung (1) konfiguriert ist, um eine Umkehr der Drehrichtung (r1, r2) der Schneideinheit (5, 6) darauf basierend auszulösen, dass der Rasenmäher (3) eine Kurve (St) um 180 Grad ausführt.

4. Steueranordnung (1) nach einem der vorstehenden Ansprüche, wobei die Steueranordnung (1) konfiguriert ist, um in einem ersten Betriebsmodus betrieben zu werden, in dem die Steueranordnung (1) eine Drehrichtung (r1) der Schneideinheit (5, 6) einstellt, die bewirkt, dass sich eine Vorderkante (5', 6') der Schneideinheit (5, 6), gesehen in einer Fahrtrichtung (fd) nach vorne, in einer Richtung (d1) zu einer Seite (s1) des Rasenmähers (3) hin bewegt, an der sich ein vorheriger angrenzender Mähhub (Sp) befindet.

5. Steueranordnung (1) nach einem der vorhergehenden Ansprüche, wobei die Steueranordnung (1) konfiguriert ist, um in einem zweiten Betriebsmodus betrieben zu werden, in dem die Steueranordnung (1) eine Drehrichtung (r2) der Schneideinheit (5, 6) einstellt, die bewirkt, dass sich eine Vorderkante (5', 6') der Schneideinheit (5, 6), gesehen in Fahrtrichtung (fd) nach vorne, in einer Richtung (d2) von einer Seite (s1) des Rasenmähers (3) weg bewegt, an der sich ein vorheriger angrenzender Mähhub (Sp) befindet.

6. Steueranordnung (1) nach Anspruch 4 und 5, wobei der Rasenmäher (3) eine Eingabeeinheit (11) umfasst und wobei die Steueranordnung (1) basierend auf Daten von der Eingabeeinheit (11) steuerbar ist, um in einem von dem ersten und dem zweiten Betriebsmodus betrieben zu werden.

7. Steueranordnung (1) nach einem der vorstehenden Ansprüche, wobei die Steueranordnung (1) konfiguriert ist, um ferner die Drehrichtung (r1, r2) der Schneideinheit (5, 6) basierend auf Daten einzustellen, die mindestens eines darstellen von einem Energiepegel einer Batterie (9) des Rasenmähers (3) und einem geschätzten Energieverbrauch für ein Mähen entlang des Navigationspfads (7).

8. Selbstangetriebener robotischer Rasenmäher (3), umfassend eine Steueranordnung (1) nach einem der Ansprüche 1 bis 7.

9. Verfahren (100) zum Betreiben eines selbstangetriebenen robotischen Rasenmähers (3), der Rasenmäher (3) umfassend eine Schneideinheit (5, 6), die konfiguriert ist, um sich während des Betriebs des Rasenmähers (3) zu drehen, wobei eine Drehrichtung (r1, r2) der Schneideinheit (5, 6) umkehrbar ist, und wobei der Rasenmäher (3) eine Steueranordnung (1) umfasst, die konfiguriert ist, um den Rasenmäher (3) zu navigieren, und
wobei das Verfahren (100) die Schritte umfasst:
- Navigieren (130) des Rasenmähers (3) entlang eines Navigationspfads (7), und
- Einstellen (111) der Drehrichtung (r1, r2) der Schneideinheit (5, 6) basierend auf dem Ort eines vorherigen angrenzenden Mähhubs (Sp) oder eines bevorstehenden angrenzenden Mähhubs (Su) relativ zu einer Seite (s1, s2) des Rasenmähers (3).

10. Verfahren (100) nach Anspruch 9, wobei das Verfahren (100) ferner umfasst:
- Auslösen (112) einer Umkehr der Drehrichtung (r1, r2) der Schneideinheit (5, 6) darauf basierend, dass der Rasenmäher (3) eine Kurve (St) um 180 Grad ausführt.

11. Verfahren (100) nach Anspruch 9 oder 10, wobei das Verfahren (100), in einem ersten Betriebsmodus, ferner umfasst:
- Einstellen (114) einer Drehrichtung (r1) der Schneideinheit (5, 6), die bewirkt, dass sich eine Vorderkante (5', 6') der Schneideinheit (5, 6), gesehen in einer Fahrtrichtung (fd) nach vorne, in einer Richtung (d1) zu einer Seite (s1) des Rasenmähers (3) hin bewegt, an der sich ein vorheriger angrenzender Mähhub (Sp) befindet.

12. Verfahren (100) nach einem der Ansprüche 9 bis 11, wobei das Verfahren (100), in einem zweiten Betriebsmodus, ferner umfasst:
- Einstellen (115) einer Drehrichtung (r2) der Schneideinheit (5, 6), die bewirkt, dass sich eine Vorderkante (5', 6') der Schneideinheit (5, 6), gesehen in einer Fahrtrichtung (fd) nach vorne, in einer Richtung (d2) von einer Seite (s1) des Rasenmähers (3) weg bewegt, an der sich ein vorheriger angrenzender Mähhub (Sp) befindet.

13. Verfahren (100) nach Anspruch 11 und 12, wobei der Rasenmäher (3) eine Eingabeeinheit (11) umfasst und wobei das Verfahren (100) umfasst:
- Auswählen (113) zwischen einem des ersten und des zweiten Betriebsmodus basierend auf Daten von der Eingabeeinheit (11).

14. Verfahren (100) nach einem der Ansprüche 9 bis 13, wobei das Verfahren (100) umfasst:
- Einstellen (116) der Drehrichtung (r1, r2) der Schneideinheit (5, 6) basierend auf Daten, die mindestens eines darstellen von einem Energiepegel der Batterie (9) des Rasenmähers (3) und einem geschätzten Energieverbrauch für das Mähen entlang des Navigationspfads (7).

15. Computerprogramm, umfassend Anweisungen, die, wenn das Programm durch eine Steueranordnung (1) nach einem der Ansprüche 1 bis 7 ausgeführt wird, die Steueranordnung (1) veranlassen, das Verfahren (100) nach einem der Ansprüche 9 bis 14 vorzunehmen.

16. Computerlesbares Medium (200), auf dem das Computerprogramm nach Anspruch 15 gespeichert ist.

## Revendications

1. Agencement de commande (1) pour une tondeuse à gazon (3) robotisée automotrice,
la tondeuse à gazon (3) comprenant une unité de coupe (5, 6) conçue pour être en rotation pendant le fonctionnement de la tondeuse à gazon (3), dans lequel une direction de rotation (r1, r2) de l'unité de coupe (5, 6) est réversible, et
dans lequel l'agencement de commande (1) est configuré pour faire naviguer la tondeuse à gazon (3) le long d'un trajet de navigation (7) comprenant des courses de tonte adjacentes (S, Sp, Su),
**caractérisé en ce que** l'agencement de commande (1) est configuré pour régler la direction de rotation (r1, r2) de l'unité de coupe (5, 6) en fonction de l'emplacement d'une course de tonte adjacente précédente (Sp) ou d'une course de tonte adjacente suivante (Su) par rapport à un côté (s1, s2) de la tondeuse à gazon (3).

2. Agencement de commande (1) selon la revendication 1, dans lequel le trajet de navigation (7) comprend des courses de tonte adjacentes (S, Sp, Su) parallèles.

3. Agencement de commande (1) selon la revendication 1 ou 2, dans lequel l'agencement de commande (1) est configuré pour déclencher une inversion de la direction de rotation (r1, r2) de l'unité de coupe (5, 6) lorsque la tondeuse à gazon (3) effectue un virage de 180 degrés (St).

4. Agencement de commande (1) selon l'une quelconque des revendications précédentes, dans lequel l'agencement de commande (1) est configuré pour fonctionner dans un premier mode fonctionnel dans lequel l'agencement de commande (1) règle une direction de rotation (r1) de l'unité de coupe (5, 6) amenant un bord d'attaque (5', 6') de l'unité de coupe (5, 6), vu dans une direction de déplacement avant (fd), à se déplacer dans une direction (d1) vers un côté (s1) de la tondeuse à gazon (3) au niveau duquel se trouve une course de tonte adjacente précédente (Sp).

5. Agencement de commande (1) selon l'une quelconque des revendications précédentes, dans lequel l'agencement de commande (1) est configuré pour fonctionner dans un second mode fonctionnel dans lequel l'agencement de commande (1) règle une direction de rotation (r2) de l'unité de coupe (5, 6) amenant un bord d'attaque (5', 6') de l'unité de coupe (5, 6), vu dans une direction de déplacement avant (fd), à se déplacer dans une direction (d2) loin d'un côté (s1) de la tondeuse à gazon (3) au niveau duquel se trouve une course de tonte adjacente précédente (Sp).

6. Agencement de commande (1) selon la revendication 4 et 5, dans lequel la tondeuse à gazon (3) comprend une unité d'entrée (11), et dans lequel l'agencement de commande (1) peut être commandé pour fonctionner dans l'un des premiers et seconds modes fonctionnels en fonction des données provenant de l'unité d'entrée (11).

7. Agencement de commande (1) selon l'une quelconque des revendications précédentes, dans lequel l'agencement de commande (1) est configuré pour régler en outre la direction de rotation (r1, r2) de l'unité de coupe (5, 6) en fonction de données représentant au moins l'un parmi un niveau d'énergie d'une batterie (9) de la tondeuse à gazon (3) et une consommation d'énergie estimée pour la tonte le long du trajet de navigation (7).

8. Tondeuse à gazon robotisée automotrice (3) comprenant un agencement de commande (1) selon l'une quelconque des revendications 1 à 7.

9. Procédé (100) de fonctionnement d'une tondeuse à gazon (3) robotisée automotrice, la tondeuse à gazon (3) comprenant une unité de coupe (5, 6) configurée pour être en rotation pendant le fonctionnement de la tondeuse à gazon (3), dans lequel une direction de rotation (r1, r2) de l'unité de coupe (5, 6) est réversible, et dans lequel la tondeuse à gazon (3) comprend un agencement de commande (1) configuré pour faire naviguer la tondeuse à gazon (3), et
dans lequel le procédé (100) comprend les étapes consistant à :
- faire naviguer (130) la tondeuse à gazon (3) le long d'un trajet de navigation (7), et
- régler (111) la direction de rotation (r1, r2) de l'unité de coupe (5, 6) en fonction de l'emplacement d'une course de tonte adjacente précédente (Sp) ou d'une course de tonte adjacente suivante (Su) par rapport à un côté (s1, s2) de la tondeuse à gazon (3).

10. Procédé (100) selon la revendication 9, dans lequel le procédé (100) comprend en outre :
- le déclenchement (112) d'une inversion de la direction de rotation (r1, r2) de l'unité de coupe (5, 6) lorsque la tondeuse à gazon (3) effectue un virage de 180 degrés (St).

11. Procédé (100) selon la revendication 9 ou 10, dans lequel le procédé (100) comprend en outre, dans un premier mode fonctionnel :
- le réglage (114) d'une direction de rotation (r1) de l'unité de coupe (5, 6) amenant un bord d'attaque (5', 6') de l'unité de coupe (5, 6), vu dans une direction de marche avant (fd), à se déplacer dans une direction (d1) vers un côté (s1) de la tondeuse à gazon (3) au niveau duquel se trouve une course de tonte adjacente précédente (Sp).

12. Procédé (100) selon l'une quelconque des revendications 9 à 11, dans lequel le procédé (100) comprend en outre, dans un second mode fonctionnel :
- le réglage (115) d'une direction de rotation (r2) de l'unité de coupe (5, 6) amenant un bord d'attaque (5', 6') de l'unité de coupe (5, 6), vu dans une direction de déplacement avant (fd), à se déplacer dans une direction (d2) éloignée d'un côté (s1) de la tondeuse à gazon (3) au niveau duquel se trouve une course de tonte adjacente précédente (Sp).

13. Procédé (100) selon la revendication 11 et 12, dans lequel la tondeuse à gazon (3) comprend une unité d'entrée (11), et dans lequel le procédé (100) comprend :
- la sélection (113) entre l'un des premier et second modes de fonctionnement en fonction de données fournies à partir de l'unité d'entrée (11).

14. Procédé (100) selon l'une quelconque des revendications 9 à 13, dans lequel le procédé (100) comprend :
- le réglage (116) de la direction de rotation (r1, r2) de l'unité de coupe (5, 6) en fonction de données représentant au moins l'un parmi un niveau d'énergie d'une batterie (9) de la tondeuse à gazon (3) et une estimation de la consommation d'énergie pour la tonte le long du trajet de navigation (7).

15. Programme informatique comprenant des instructions qui, lorsque le programme est exécuté par un agencement de commande (1) selon l'une quelconque des revendications 1 à 7, amènent l'agencement de commande (1) à réaliser le procédé (100) selon l'une quelconque des revendications 9 à 14.

16. Support lisible par ordinateur (200) sur lequel est stocké le programme informatique selon la revendication 15.
